# FASCICULE DE BREVET EUROPEEN

(11) **EP 3 390 767 B1**
(45) Date de publication et mention de la délivrance du brevet: **19.02.2020**
(21) Numéro de dépôt: 16795359.5
(22) Date de dépôt: 15.11.2016
(51) Int. Cl.: E21B 17/08, E21B 17/046, F16L 37/107, F16L 37/10

(54) **CONNECTEUR POUR ASSEMBLER DEUX TRONÇONS DE COLONNE MONTANTE AVEC BAGUE DE VERROUILLAGE INTERNE ET PIONS DEMONTABLES**
VERBINDER ZUR MONTAGE ZWEIER STEIGROHRSEGMENTE MIT INTERNEM VERSCHLUSSRING UND ABNEHMBAREN STIFTEN
CONNECTOR FOR ASSEMBLING TWO RISER SEGMENTS, COMPRISING AN INTERNAL LOCKING RING AND REMOVABLE PINS

(30) Priorité: 17.12.2015 FR 1562604
(43) Date de publication de la demande: 24.10.2018
(73) Titulaire: IFP Energies nouvelles, 92500 Rueil-Malmaison (FR)
(72) Inventeur: PERSENT, Emmanuel, 78290 Croissy Sur Seine (FR); PAPON, Gerard, 78690 Les Essarts Le Roi (FR); ROGUET,Eleonore, 92500 Rueil-malmaison (FR); SAEEDI, Navid, 94140 Alfortville (FR)
(74) Mandataire: IFP Energies nouvelles
(86) Numéro de dépôt international: PCT/EP2016/077751
(87) Numéro de publication internationale: WO 2017/102219

(56) Documents cités:
- WO-A1-2015/169560
- FR-A1- 2 928 958
- US-A- 4 280 719

## Description

La présente invention concerne le domaine du forage et de l'exploitation pétrolière de gisement en mer très profonde. Elle concerne un connecteur de colonne montante.

Une colonne montante (ou « riser ») de forage est constituée par un ensemble d'éléments tubulaires de longueur comprise entre 15 et 27 m (50 et 90 feet), assemblés par des connecteurs. Les éléments tubulaires sont généralement constitués d'un tube principal muni de connecteurs à chaque extrémité. Des conduites auxiliaires tubulaires dites également conduites périphériques couramment nommée "kill line", "choke line", "booster line" et "hydraulic line" permettant la circulation de fluides techniques sont prévues parallèlement au tube principal. Les éléments tubulaires sont assemblés sur le lieu de forage, à partir d'un support flottant. La colonne descend dans la tranche d'eau au fur et à mesure de l'assemblage des éléments tubulaires, jusqu'à atteindre la tête de puits située sur le fond marin.

Dans l'optique de forer à des profondeurs d'eau pouvant atteindre 3500 m ou plus, le poids de la colonne montante devient très pénalisant. Ce phénomène est aggravé par le fait que, pour une même pression maximale de service, la longueur de la colonne impose un diamètre intérieur des conduites auxiliaires plus grand compte tenu de la nécessité de limiter les pertes de charge.

Par ailleurs, la nécessité de diminuer le temps d'assemblage des colonnes montantes est d'autant plus critique que la profondeur d'eau, et donc la longueur de la colonne, sont importantes.

Une colonne montante (ou « riser ») pour les autres applications, notamment la production, le conditionnement (de l'anglais « completion ») ou pour le reconditionnement (de l'anglais « work-over »), est également constituée par un ensemble d'éléments tubulaires assemblés par des connecteurs.

Les documents FR 2925105, FR 2956693, FR 2956694, FR 2928958 et US 4,280,719 décrivent différentes solutions proposant notamment de faire participer les conduites auxiliaires, conjointement avec le tube principal, à la reprise des efforts longitudinaux appliqués à la colonne montante. Toutefois, pour les systèmes décrits dans ces brevets, la fixation des lignes auxiliaires par rapport au tube principal entraîne des efforts de traction dans les lignes auxiliaires. Afin de résister à ces efforts de traction, les épaisseurs des lignes auxiliaires sont importantes, ce qui génère une augmentation de la masse, de la taille des flotteurs et par conséquent du coût de la colonne montante. Une autre problématique de ces connecteurs concerne l'inspection et la maintenance de la bague de verrouillage. En effet, les bagues de verrouillage dans les brevets précédemment cités ne sont pas entièrement démontables. Il n'est donc pas possible d'inspecter l'ensemble de la bague de verrouillage.

Pour pallier ce problème les demandes de brevet WO 2015/071411 et WO 2015/169560 concernent des connecteurs munis de bagues de verrouillage démontables, grâce à deux connexions à baïonnettes. Toutefois, ces deux connecteurs nécessitent un agencement particulier de tenons pour empêcher la déconnexion simultanée de la bague avec les deux tronçons de colonne montante.

La présente invention décrit une solution qui propose une conception compacte d'un connecteur au moyen d'une bague de verrouillage entourant les éléments de tube principal. Le connecteur selon l'invention comporte une bague de verrouillage permettant une connexion de type à baïonnette de part et d'autre avec deux tronçons de colonne montante, au moyen de tenons ayant des plages angulaires identiques. En outre, le connecteur comporte au moins un pion démontable pour bloquer la bague de verrouillage en translation, notamment lors du verrouillage et du déverrouillage. Ainsi, le connecteur selon l'invention est démontable, et le démontage simultané de la bague avec les deux tronçons de colonne montante est empêché. De plus, les dimensions de la bague (diamètre interne quasiment identique au diamètre externe des éléments de tube principal) permettent un positionnement de la bague de verrouillage au plus près des éléments de tube principal, ce qui permet une compacité du connecteur.

### Le dispositif selon l'invention

L'invention concerne un connecteur pour assembler deux tronçons de colonne montante, comportant un premier élément de tube principal prolongé par un élément connecteur mâle, un deuxième élément de tube principal prolongé par un élément connecteur femelle, l'élément connecteur mâle s'emboîtant dans ledit élément connecteur femelle pour connecter lesdits deux éléments de tube principal, ledit connecteur comprenant des moyens de verrouillage dudit assemblage comportant une bague de verrouillage disposée autour desdits éléments de tube principal, ladite bague de verrouillage juxtaposant la zone de l'emboîtement dudit élément connecteur mâle dans ledit élément connecteur femelle, ladite bague de verrouillage comprenant une première) et une deuxième séries de tenons sur sa surface intérieure, et lesdits éléments connecteurs mâle et femelle comportant respectivement sur leur face extérieure une troisième et une quatrième séries de tenons coopérant respectivement avec lesdites première et deuxième séries de tenons. Lesdits moyens de verrouillage comprennent en outre au moins un pion démontable agencé dans ladite bague de verrouillage et coopérant avec un tenon de ladite troisième ou de ladite quatrième série de tenons pour bloquer ladite bague de verrouillage en translation par rapport audit élément connecteur mâle ou femelle, et les tenons des première et deuxième séries de tenons sont en saillie sur des plages angulaires identiques.

Selon l'invention, chaque série de tenons comporte au moins une rangée de tenons, et de préférence deux rangées de tenons.

Ledit pion démontable est agencé entre chaque tenon d'une rangée de tenons de ladite première ou de ladite deuxième série de tenons.

Selon une mise en œuvre de l'invention, ledit pion démontable est agencé au niveau de ladite rangée de tenons la plus proche du centre de ladite bague de verrouillage de ladite première ou deuxième série de tenons.

Selon une conception, les répartitions circonférentielles desdits tenons de deux rangées consécutives de tenons d'une même série de tenons sont alternées.

Selon une variante, au moins une rangée de tenons d'une série de tenons est inscrite dans un diamètre différent d'une autre rangée de ladite série de tenons.

Conformément à une alternative, les rangées de tenons d'au moins une série de tenons sont inscrites dans des diamètres identiques.

Conformément à un mode de réalisation, ledit pion démontable est fileté et est agencé dans ladite bague de verrouillage par vissage.

De préférence, lesdites séries de tenons comportent au moins trois tenons, et de préférence au moins quatre tenons.

Selon un mode de réalisation, lesdits éléments connecteurs mâle et femelle sont munis de moyens de guidage pour le passage respectif d'un premier et d'un deuxième élément de tube auxiliaire.

Selon une première variante, lesdits éléments de tube auxiliaire sont solidairement fixés auxdits moyens de guidage.

Selon une deuxième variante, un élément de tube auxiliaire est solidaire d'un desdits moyens de guidage et l'autre élément de tube auxiliaire est connecté par une liaison glissante avec l'autre desdits moyens de guidage, ladite liaison glissante autorisant un mouvement de translation relatif entre ledit élément de tube principal et ledit élément de tube auxiliaire sur une distance limitée.

Selon une troisième variante, lesdits deux éléments de tube auxiliaire sont connectés par une liaison glissante avec lesdits moyens de guidage.

Selon une mise en œuvre de l'invention, un premier jeu axial est prévu entre ladite première série de tenons et ladite troisième série de tenons, et un deuxième jeu axial est prévu entre ladite deuxième série de tenons et ladite quatrième série de tenons.

De manière avantageuse, lesdits premier et deuxième jeux axiaux sont strictement positifs et sont compris entre 0,5 et 30 mm, de préférence entre 0,5 et 10 mm.

En outre, la présente invention concerne une colonne montante comprenant au moins deux tronçons de colonne montante assemblés par un connecteur selon l'une des caractéristiques précédentes.

De plus, l'invention concerne un procédé d'assemblage de deux tronçons de colonne montante au moyen d'un connecteur selon l'une des caractéristiques précédentes, procédé pour lequel on réalise les étapes suivantes :
a) on insère un premier élément de tube principal dans ladite bague de verrouillage ;
b) on insère ledit pion démontable dans ladite bague de verrouillage ;
c) on insère un deuxième élément de tube principal dans ladite bague de verrouillage; et
d) on verrouille ladite bague de verrouillage par rotation relative de ladite bague de verrouillage par rapport auxdits éléments de tube principal.

Selon une mise en œuvre, au moins une insertion d'au moins un élément de tube principal dans ladite bague de verrouillage est mise en œuvre par une translation relative de ladite bague de verrouillage par rapport audit élément de tube principal.

Selon une variante, au moins une insertion d'au moins un élément de tube principal dans ladite bague de verrouillage est mise en œuvre par au moins une première translation, une première rotation et une deuxième translation relatives de ladite bague de verrouillage par rapport audit élément de tube principal.

Par ailleurs, l'invention concerne un procédé de désassemblage de deux tronçons de colonne montante au moyen d'un connecteur selon l'une des caractéristiques précédentes, procédé dans lequel on réalise les étapes suivantes :
a) on déverrouille ladite bague de verrouillage ;
b) on retire un premier élément de tube principal de ladite bague de verrouillage par rotation relative de ladite bague de verrouillage par rapport auxdits éléments de tube principal;
c) on retire ledit pion démontable de ladite bague de verrouillage; et
d) on retire un deuxième élément de tube principal de ladite bague de verrouillage.

Selon une mise en œuvre, au moins un retrait d'au moins un élément de tube principal de ladite bague de verrouillage est mis en œuvre par une translation relative de ladite bague de verrouillage par rapport audit élément de tube principal.

Selon une variante, au moins un retrait d'au moins un élément de tube principal de ladite bague de verrouillage est mise en œuvre par une première translation, une première rotation et une deuxième translation relatives de la bague de verrouillage par rapport audit élément de tube principal.

En outre l'invention concerne l'utilisation d'une colonne montante selon l'une des caractéristiques précédentes pour effectuer une opération de forage, ou de reconditionnement de puits ou de production en mer.

### Présentation succincte des figures

D'autres caractéristiques et avantages du dispositif selon l'invention, apparaîtront à la lecture de la description ci-après d'exemples non limitatifs de réalisations, en se référant aux figures annexées et décrites ci-après.
La figure 1 schématise une colonne montante selon l'invention.
La figure 2 illustre un tronçon de colonne montante selon un mode de réalisation de l'invention.
La figure 3 illustre le connecteur selon un autre mode de réalisation de l'invention.
La figure 4 illustre un élément connecteur mâle selon un mode de réalisation de l'invention.
La figure 5 illustre un élément connecteur femelle selon un mode de réalisation de l'invention.
La figure 6 illustre une bague de verrouillage selon un mode de réalisation de l'invention.
La figure 7 illustre une connexion avec jeu selon un mode de réalisation de l'invention.
Les figures 8a à 8d illustrent la répartition des jeux pour le mode de réalisation de la figure 7, respectivement pour les étapes d'approche, de mise en contact de la bague avec l'élément connecteur femelle, de verrouillage et de mise sous tension.

### Description détaillée de l'invention

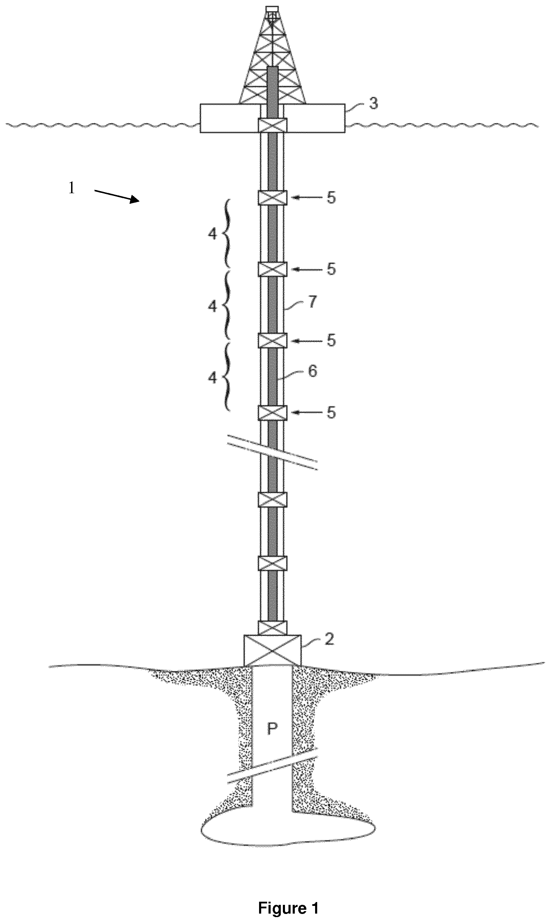

Selon un exemple (non limitatif) de réalisation de l'invention, la figure 1 schématise une colonne montante 1 installée en mer. La colonne montante 1 prolonge le puits P et s'étend depuis la tête de puits 2 jusqu'à un support flottant 3, par exemple une plateforme ou un bateau. La tête de puits 2 est munie d'obturateur couramment nommé "B.O.P." ou "Blow Out Preventer". La colonne montante 1 est constituée par l'assemblage de plusieurs tronçons 4 assemblés bout à bout par des connecteurs 5. Chaque tronçon est composé d'un élément de tube principal 6 muni d'au moins un élément de conduite auxiliaire 7, également appelée conduite périphérique. Les conduites auxiliaires dénommées "kill line" ou "choke line" sont utilisées pour assurer la sécurité du puits pendant le déroulement des procédures de contrôle des venues de fluides sous pression dans le puits. La ligne "choke" est une ligne de sécurité véhiculant des fluides (huile, eau, gaz) en provenance du puits lors d'une venue et les dirigeant vers le manifold de duses et la torche. La ligne "kill" est une ligne de sécurité qui permet d'injecter dans le puits des fluides lourds et des ciments permettant de stopper une éruption incontrôlable autrement. La conduite auxiliaire dénommée "booster line" permet d'injecter de la boue dans le puits afin d'augmenter sa vitesse de remontée et d'éviter la sédimentation des déblais ; elle sert aussi pour remplacer la boue contenue dans le riser par de l'eau avant une déconnexion. La conduite dénommée "hydraulic line" permet de commander l'obturateur de la tête de puits. Les lignes hydrauliques permettent d'alimenter les organes de sécurité des BOP (vannes et accumulateurs) en fluide hydraulique (eau distillée chargée en glycol) sous pression.

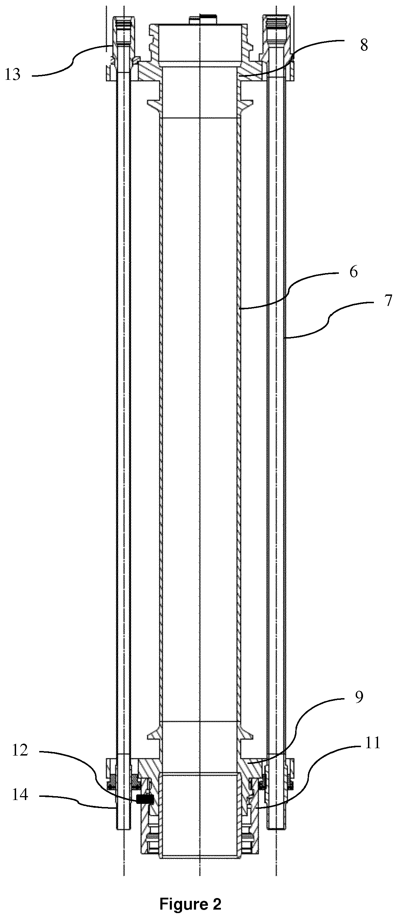

La figure 2 représente schématiquement un tronçon 4 de la colonne montante selon un mode de réalisation non limitatif de l'invention. Le tronçon 4 comporte un élément de tube principal 6 dont l'axe constitue l'axe de la colonne montante. Les tubes auxiliaires 7 constituent des lignes ou conduites auxiliaires disposées parallèlement à l'axe du tube principal. Les éléments de tube auxiliaire 7 ont des longueurs sensiblement égales à la longueur de l'élément de tube principal 6, en général compris entre 10 et 30 mètres. Au moins une ligne 7 est disposée à la périphérie du tube principal. Sur la figure 2, deux lignes 7 sont schématisées.

Un connecteur 5 représenté sur la figure 1 est constitué de deux éléments désignés, en référence à la figure 2, par l'élément connecteur femelle 8 et l'élément connecteur mâle 9. Les éléments connecteurs 8 et 9 sont montés aux extrémités de l'élément de tube principal 6. L'élément connecteur femelle 8 est solidaire du tube 6, par exemple au moyen d'un soudage, d'un vissage, d'un sertissage ou d'une liaison par coincement. L'élément connecteur mâle 9 est solidaire du tube 6, par exemple au moyen d'un soudage, d'un vissage, d'un sertissage ou d'une liaison par coincement. Pour l'exemple illustré, l'assemblage de l'élément connecteur mâle 9 avec un élément connecteur femelle 8 d'un autre tronçon forme le connecteur 5 qui transmet des efforts d'un tronçon de colonne montante au tronçon suivant, notamment les efforts longitudinaux auxquels est soumise la colonne montante.

Le connecteur selon l'invention est adapté à une colonne montante de forage, par exemple telle que décrite en relation avec les figures 1 et 2, mais le connecteur selon l'invention peut également être adapté à une colonne montante de conditionnement (de l'anglais « completion »), de reconditionnement (de l'anglais « work-over ») ou de production, qui possède notamment la particularité de ne pas avoir de conduite auxiliaire. Selon l'invention, le connecteur comprend :
- un premier élément de tube principal prolongé par un élément connecteur mâle, et celui-ci peut être éventuellement muni de moyens de guidage (par exemple une bride mâle) pour le passage d'un élément de tube auxiliaire (cas où la colonne comporte au moins une ligne auxiliaire),
- un deuxième élément de tube principal prolongé par un élément connecteur femelle, et celui-ci peut être éventuellement muni de moyens de guidage (par exemple une bride femelle) pour le passage d'un élément de tube auxiliaire (cas où la colonne comporte au moins une ligne auxiliaire), l'élément connecteur mâle s'emboitant dans l'élément connecteur femelle pour connecter les éléments de tubes principal et les éléments de tube auxiliaire,
- éventuellement, un premier élément de tube auxiliaire passant dans la bride mâle,
- éventuellement un deuxième élément de tube auxiliaire passant dans la bride femelle, et
- des moyens de verrouillage de l'assemblage comprenant :
   ∘ une bague de verrouillage située autour des éléments de tube principal, la bague de verrouillage juxtaposant la zone de l'emboîtement de l'élément connecteur mâle dans l'élément connecteur femelle. la bague de verrouillage comprenant, sur sa face intérieure, une première série et une deuxième série de tenons aptes à coopérer avec une troisième série et une quatrième série de tenons disposées respectivement sur la face extérieure des éléments connecteurs mâle et femelle, et
   ∘ au moins un pion démontable, le pion démontable étant agencé dans la bague de verrouillage et étant apte à coopérer avec au moins un tenon de la troisième ou de quatrième série de tenons (c'est-à-dire avec un tenon de l'élément connecteur mâle ou femelle) pour bloquer la bague de verrouillage en translation par rapport à l'un des éléments connecteurs mâle ou femelle.

Pour le mode de réalisation, pour lequel le connecteur comporte au moins un élément de tube auxiliaire, la bague de verrouillage est située entre les éléments de tube principal et les éléments de tube auxiliaires : la bague de verrouillage est positionnée sur la surface extérieure des éléments connecteurs mâle et femelle, et l'élément de tube auxiliaire est situé à l'extérieur de la bague de verrouillage. En d'autres termes, la distance entre l'axe de l'élément de tube auxiliaire et l'axe du tube principal est supérieure à la somme du rayon extérieur de la bague de verrouillage et du rayon de l'élément de conduite auxiliaire.

Ainsi, grâce aux quatre séries de tenons, deux connexions de type à baïonnette sont formées : une première entre la bague de verrouillage et l'élément connecteur mâle, une deuxième entre la bague de verrouillage et l'élément connecteur femelle. De cette manière, la bague de verrouillage est rendue démontable par rapport aux éléments connecteurs mâle et femelle, ce qui permet son inspection et sa maintenance.

Le pion démontable est apte à coopérer avec un tenon d'un des deux éléments connecteurs mâle ou femelle, pour empêcher une translation axiale de la bague de verrouillage avec l'élément connecteur mâle ou femelle avec lequel le pion démontable est en contact. Ainsi, lors de l'assemblage de deux tronçons au moyen du connecteur, il est possible d'empêcher le démontage de la bague de verrouillage, lorsque le deuxième élément connecteur est emboité avec le premier élément connecteur. Avantageusement, le pion démontable, une fois monté dans la bague de verrouillage, est en saillie sur la partie intérieure de la bague de verrouillage. La distance de saillie du pion démontable peut être équivalent à la distance de saillie des tenons de la bague de verrouillage. Le pion démontable peut être monté dans la bague de verrouillage sur la surface extérieure de la bague de verrouillage. De préférence, le pion démontable est agencé de manière à coopérer avec l'élément connecteur destiné à être monté en premier dans la bague de verrouillage. Ainsi, la bague de verrouillage peut être suspendue (et maintenue) à l'élément connecteur mâle ou femelle, qui est l'élément supérieur (en haut), lorsque cet élément mâle ou femelle est levé pour la connexion. Le pion démontable peut être inséré dans la bague de verrouillage une fois que le premier assemblage (bague de verrouillage et un premier élément connecteur) est assemblé mais non verrouillé. Le pion démontable peut être retiré de la bague de verrouillage une fois que le deuxième assemblage (bague de verrouillage et deuxième élément connecteur) est désassemblé, et que le premier assemblage (bague de verrouillage et premier élément connecteur) est déverrouillé (c'est-à-dire le premier élément connecteur est dans la bague de verrouillage, mais les séries de tenons ne coopèrent pas).

Selon l'invention, les tenons des première et deuxième séries de tenons (et a fortiori des troisième et quatrième séries de tenons) sont en saillie sur des plages angulaires identiques. On appelle plage angulaire d'un tenon, l'angle formé par la portion de cercle occupée par le tenon sur le diamètre dans lequel il est inscrit. Par exemple, si une série de tenons comportent des tenons qui représentent chacun un sixième de cercle, alors la plage angulaire du tenon est de 60°. Ainsi, grâce à cette conception, le verrouillage et le déverrouillage de la bague de verrouillage par rapport aux deux éléments connecteurs peuvent résulter d'une seule rotation et devient simultané. De cette manière, la bague de verrouillage n'est entraînée en rotation qu'entre seulement deux positions angulaires.

Selon une première mise en œuvre de l'invention, les répartitions circonférentielles des première et deuxième séries de tenons sont symétriques par rapport à un plan radial passant entre les deux séries de tenons. En d'autres termes, les tenons des première et deuxième séries de tenons se font face (sont alignés). Selon une deuxième mise en œuvre de l'invention, les répartitions circonférentielles des première et deuxième série de tenons sont opposées : la répartition circonférentielle de la deuxième série de tenons est décalée par rapport à la première série de tenons, d'un angle correspondant à la plage angulaire d'un tenon. En d'autres termes, les tenons d'une série font face aux intervalles de l'autre série. Selon une troisième mise en œuvre de l'invention, les répartitions circonférentielles des tenons des première et deuxième séries sont décalées l'une par rapport à l'autre d'un angle correspondant à la moitié de la plage angulaire d'un tenon (ou tout autre angle).

L'agencement de la bague de verrouillage autour des éléments de tube principal, en juxtaposant la zone d'emboîtement des éléments connecteurs mâle et femelle implique une équivalence du diamètre interne de la bague de verrouillage et du diamètre externe des éléments de tube principal. La zone d'emboitement correspond à la portion du connecteur, dans laquelle l'élément connecteur mâle s'emboîte dans l'élément connecteur femelle. En d'autres termes, le diamètre interne de la bague de verrouillage correspond sensiblement au diamètre externe des éléments de tube principal, auquel on ajoute la hauteur de saillie des tenons de la bague de verrouillage et des éléments connecteurs. Ainsi, le diamètre interne de la bague de verrouillage est sensiblement égale au diamètre de l'élément connecteur mâle emboité dans l'élément connecteur femelle.

De préférence, la bague de verrouillage peut être réalisée en une seule pièce.

Le connecteur peut être conçu et dimensionné pour satisfaire les spécifications mentionnées par les normes API 16 R et API 2RD éditées par l'American Petroleum Institute (Institut Américain du Pétrole).

Les différents modes de réalisation décrits précédemment et ci-après peuvent être combinés, de manière à combiner leurs effets.

Selon une conception de l'invention, le pion démontable peut être fileté. Il peut alors être monté dans la bague de verrouillage par vissage. Cette conception permet un assemblage rapide du pion démontable. Afin de faciliter son montage, le pion démontable peut être creux pour permettre sa manipulation avec un outil.

Selon une caractéristique de l'invention, le pion peut être de forme quelconque, notamment de forme cylindrique (de section circulaire ou elliptique), conique, parallélépipédique (de section rectangulaire ou carré), etc.

Selon un mode de réalisation de l'invention, chaque série de tenons comporte au moins une rangée de tenons. On appelle rangée de tenons une répartition circonférentielle des tenons. Dans chaque rangée de tenons, il existe une alternance de tenons en saillie et d'espaces vides (intervalles), ces espaces vides permettent le passage des tenons correspondant de la série de tenons avec laquelle la rangée de tenons coopère.

Conformément une mise en œuvre de l'invention, les séries de tenons peuvent comprendre une pluralité de rangées de tenons, en particulier deux ou trois rangées de tenons. La pluralité de rangées de tenons permet une diminution des efforts axiaux sur les tenons, ce qui permet de limiter la fatigue mécanique des tenons.

Selon une conception possible, chaque série de tenons comporte une seule rangée de tenons. Selon une première alternative, chaque série de tenons comporte deux rangées de tenons. Selon une deuxième alternative, chaque série de tenons comporte trois rangées de tenons. Selon une troisième alternative, deux des quatre séries de tenons comportent une rangée de tenons, et les deux autres séries comportent deux rangées de tenons. Selon une quatrième alternative, deux des quatre séries de tenons comportent deux rangées de tenons, et les deux autres séries comportent trois rangées de tenons.

Dans le cas où une série de tenons comporte plusieurs rangées de tenons, alors les rangées de tenons peuvent être inscrits dans des diamètres différents. Cette conception permet de faire passer la rangée de tenons de plus faible diamètre, et ainsi, il est possible de verrouiller et déverrouiller la connexion à baïonnette par une seule rotation.

Dans le cas où une série de tenons comporte plusieurs rangées de tenons, alors les rangées de tenons peuvent être inscrits dans des diamètres identiques. Cette conception impose une insertion et un verrouillage de la connexion à baïonnette par un mouvement relatif composé d'une première translation, une première rotation, une deuxième translation et une deuxième rotation. Cette conception permet donc une meilleure sécurisation de la connexion car elle permet d'éviter une déconnexion non souhaitée.

Chaque rangée de tenons comporte une pluralité de tenons répartis régulièrement sur un diamètre. De manière avantageuse, les tenons des différentes rangées peuvent être agencés pour permettre un verrouillage sur 360°. Selon une conception, les rangées de tenons peuvent comprendre trois tenons ayant une plage angulaire de 60°, ou 40°. Selon une alternative, les rangées de tenons peuvent comprendre quatre tenons ayant une plage angulaire de 45°, ou 30°. Selon une alternative, les rangées de tenons peuvent comprendre cinq tenons ayant une plage angulaire de 36°, ou 24°. Selon une autre alternative, les rangées de tenons peuvent comprendre six tenons ayant une plage angulaire de 30°. Selon une alternative, les rangées de tenons peuvent comprendre huit tenons ayant une plage angulaire de 22,5° ou 15°. De manière à avoir les tenons en saillie sur des plages angulaires identiques, toutes les rangées de toutes les séries de tenons peuvent comporter le même nombre de tenons.

Selon un mode de réalisation de l'invention, les moyens de verrouillage comportent une pluralité de pions. Ainsi, il est possible de répartir les efforts sur les pions et les tenons en coopération. Pour ce mode de réalisation, il peut être prévu un pion en coopération sur chaque tenon de la troisième série ou de la quatrième série de tenons (série de tenons des éléments connecteurs mâle et femelle). Alternativement, il peut être prévu un pion démontable en coopération avec un tenon sur deux parmi les tenons de la troisième ou de la quatrième série de tenons. Cette alternative permet d'obtenir un compris entre nombre de tenons et efforts exercés sur les tenons. Selon une variante de réalisation, trois pions démontables sont prévus dans le connecteur. Cette variante de réalisation permet un appui isostatique.

De préférence, dans le cas où la série de tenons comporte plusieurs rangées de tenons, chaque pion démontable est agencé dans la bague de verrouillage au niveau de la rangée de tenons, qui est la plus centrale de la bague de verrouillage. En d'autres termes, chaque pion est monté dans la bague de verrouillage au niveau de la rangée de tenons la plus éloigné des extrémités de la bague de verrouillage.

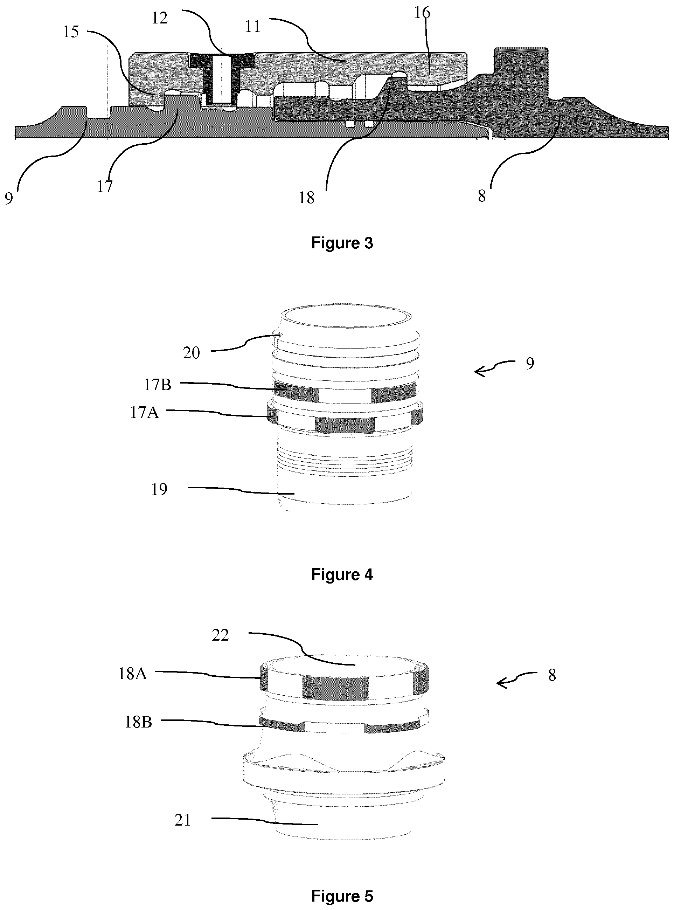

La figure 3 illustre, de manière non limitative, un connecteur selon un mode de réalisation de l'invention, le connecteur assemble deux tronçons de colonne montante. La figure 3 correspond à une vue en coupe du connecteur. Sur cette figure, seul un côté de la vue en coupe est représenté, le deuxième côté peut se déduire par symétrie axiale. L'axe des tronçons et du connecteur est représenté horizontalement. Sur cette figure, les brides et les éléments de tube auxiliaire ne sont pas représentés. Un élément connecteur mâle 9 est emboîté dans un élément connecteur femelle 8. Des moyens de verrouillage verrouillent l'assemblage. Les moyens de verrouillage comportent une bague de verrouillage 11. La bague de verrouillage 11 est agencée autour des éléments connecteurs mâle 9 et femelle 8, en juxtaposant la zone d'emboîtement de l'élément connecteur mâle 9 dans l'élément connecteur femelle 8. La bague de verrouillage 11 a un diamètre interne correspondant sensiblement au diamètre extrerne des éléments de tube principal (cf. figure 2). La bague de verrouillage 11 comprend, sur sa face intérieure, une première série de tenons 15 et une deuxième série de tenons 16. La première série de tenons 15 coopère avec une troisième série de tenons 17, agencés sur la face supérieure de l'élément connecteur mâle 9. La deuxième série de tenons 16 coopère avec une quatrième série de tenons 18, agencés sur la face supérieure de l'élément connecteur femelle. En outre, les moyens de verrouillage comportent en outre au moins un pion démontable 12. Le pion démontable 12 est monté dans la bague de verrouillage, de manière à être en saillie sur sa partie intérieure. Le pion démontable 12 est apte à coopérer avec les tenons de la troisième série de tenons 17 de l'élément connecteur mâle 9. Le pion démontable 12 illustré a sensiblement une forme cylindrique avec un épaulement. L'épaulement permet un positionnement précis du pion démontable 12. De plus, le pion démontable 12 illustré est creux pour le passage d'un outil permettant sa mise en place, et/ou pour la manœuvre de la bague de verrouillage 11, par exemple au moyen d'une barre de manœuvre.

La figure 4 illustre, de manière non limitative, un élément connecteur mâle 9 pour le mode de réalisation de la figure 3. L'élément connecteur mâle 9 est une pièce sensiblement cylindrique, comprenant une première extrémité 20, destinée à être fixée à un élément de tube principal, et une deuxième extrémité 19, destinée à être emboîtée dans un élément connecteur femelle. L'élément connecteur mâle 9 comprend, sur sa face extérieure, une troisième série de tenons constituée de deux rangées de tenons 17A et 17B. La rangée 17A est la rangée la plus au centre du connecteur. Selon le mode de réalisation illustré, chaque rangée de tenons 17A, 17B comprend quatre tenons ayant une plage angulaire de 45°. Les deux rangées de tenons 17A, 17B sont inscrits dans des diamètres identiques. De cette manière, l'insertion et le verrouillage dans la bague de verrouillage (et de manière inversée le déverrouillage et le retrait) sont permis par une combinaison de deux translations et deux rotations. De plus, les répartitions circonférentielles des tenons des rangées 17A, 17B sont alternées : les tenons de la rangée 17A font face aux (sont alignés avec) intervalles entre deux tenons de la rangée 17B et inversement.

La figure 5 illustre, de manière non limitative, un élément connecteur femelle 8 pour le mode de réalisation de la figure 3. L'élément connecteur femelle 8 est une pièce sensiblement cylindrique, comprenant une première extrémité 21, destinée à être fixée à un élément de tube principal, et une deuxième extrémité 22, destinée à l'emboîtement d'un élément connecteur mâle. L'élément connecteur femelle 8 comprend, sur sa face extérieure, une quatrième série de tenons constituée de deux rangées de tenons 18A et 18B. La rangée 18A est la rangée la plus au centre du connecteur. Selon le mode de réalisation illustré, chaque rangée de tenons 18A, 18B comprend quatre tenons ayant une plage angulaire de 45°. Les deux rangées de tenons 18A, 18B sont inscrits dans des diamètres différents. De cette manière, l'insertion et le verrouillage (et de manière inversée, le déverrouillage et le retrait) dans la bague de verrouillage sont permis par une unique translation. De plus, les répartitions circonférentielles des tenons des rangées 18A, 18B sont alternées : les tenons de la rangée 18A font face aux (sont alignés avec) intervalles entre deux tenons de la rangée 18B et inversement.

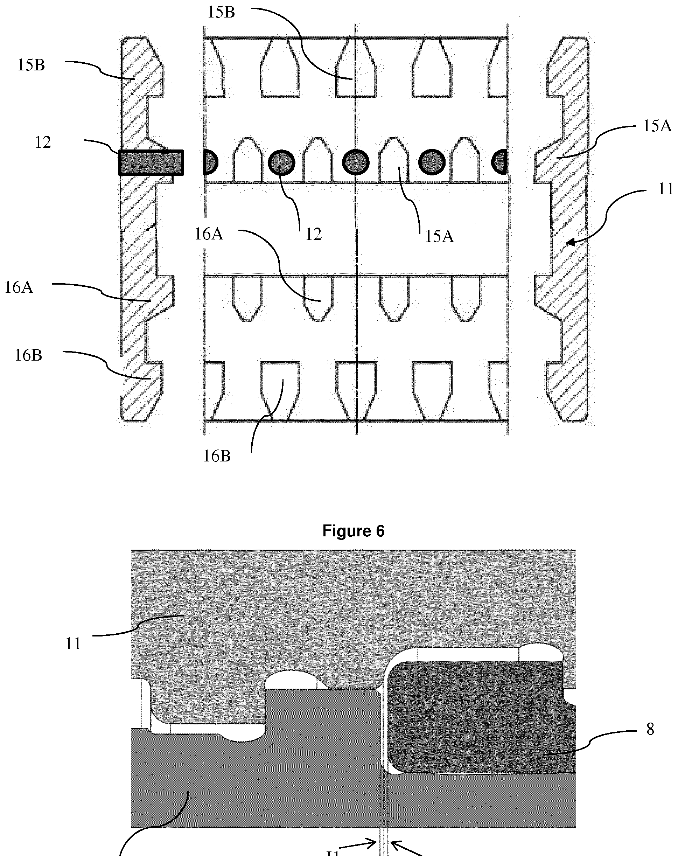

La figure 6 illustre, de manière non limitative, selon une vue en coupe, une bague de verrouillage 11 pour le mode de réalisation de la figure 3. La bague de verrouillage 11 est une pièce sensiblement cylindrique. La bague de verrouillage 11 comporte, sur sa surface intérieure, une première série de tenons 15 et une deuxième série de tenons 16 (les tenons des première et deuxième séries sont représentés schématiquement : les dimensions ne sont pas respectées). La première série de tenons 15 est apte à coopérer avec la troisième série de tenons de l'élément connecteur mâle. La deuxième série de tenons 16 est apte à coopérer avec la quatrième série de tenons de l'élément connecteur femelle. Selon le mode de réalisation illustré, chaque série de tenons 15, 16 comprend deux rangées de tenons 15A, 15B et 16A, 16B. Les rangées 15A et 16A sont les rangées de tenons les plus au centre. Chaque rangée de tenons comportent quatre tenons ayant une plage angulaire de 45°. Sur l'exemple illustré, les tenons des rangées de tenons centrales 15A, 16A sont inscrites dans des diamètres inférieurs aux diamètres des rangées de tenons externes 15B, 16B. Toutefois, pour coopérer avec les tenons de l'élément connecteur mâle illustré sur la figure 4, les rangées 15A, 15B de la première série peuvent être inscrits dans des diamètres identiques. De plus, les répartitions circonférentielles des tenons des rangées 15A, 15B sont alternées : les tenons de la rangée 15A font face aux (sont alignés avec) intervalles entre deux tenons de la rangée 15B et inversement. De la même manière, les répartitions circonférentielles des tenons des rangées 16A, 16B sont alternées : les tenons de la rangée 16A font face aux (sont alignés avec) intervalles entre deux tenons de la rangée 16B et inversement. En outre, pour le mode de réalisation illustré, les répartitions circonférentielles des tenons des première et troisième série sont symétriques par rapport à un plan radial situé entre les première et troisième série de tenons : les tenons de la rangée 15A font face (sont alignés avec) aux tenons de la rangée 16A, et les tenons de la rangée 15B font face (sont alignés avec) aux tenons de la rangée 16B.

Lorsque la colonne montante est prévue avec au moins une ligne auxiliaire, les éléments connecteurs mâle et femelle peuvent comporter des moyens de guidage des éléments de tube auxiliaire. Ces moyens de guidage peuvent être une bride (par exemple formée par un élargissement du diamètre des éléments connecteurs mâle et femelle), un support (pouvant par exemple être fixé sur les éléments connecteurs mâle et femelle), une plaque guide (pouvant par exemple être fixée sur les éléments connecteurs mâle et femelle) out tout moyen analogue. La bride, le support, et la plaque peuvent comprendre au moins un orifice pour le passage des éléments de tube auxiliaire.

Pour ce mode de réalisation, la bague de verrouillage est disposée entre l'élément de tube principal et les éléments de tube auxiliaire. La bague de verrouillage est positionnée sur la surface extérieure des éléments connecteurs mâle et femelle, et l'élément de tube auxiliaire est situé à l'extérieur de la bague de verrouillage. En d'autres termes, la distance entre l'axe de l'élément de tube auxiliaire et l'axe du tube principal est supérieure à la somme du rayon extérieur de la bague de verrouillage et du rayon de l'élément de conduite auxiliaire. La bague de verrouillage a un diamètre inférieur au diamètre périphérique (le plus grand diamètre) des éléments connecteurs mâle et femelle munis des moyens de guidage.

Le connecteur selon l'invention peut être prévu de manière à ce que l'élément de tube auxiliaire puisse avoir un mouvement relatif par rapport à l'élément de tube principal. Pour cela, les deux éléments de tube auxiliaire peuvent être montés en liaison pivot glissant ou en liaison glissante dans les moyens de guidage (par exemple dans un support d'un côté dans une plaque guide de l'autre). Dans la présente demande, une liaison pivot glissant désigne une liaison qui lie un premier solide à un deuxième solide, le premier solide pouvant translater par rapport au deuxième solide dans la direction d'un axe, et le premier solide pouvant pivoter par rapport au deuxième solide autour de ce même axe. Ainsi, l'élément de conduite auxiliaire peut coulisser et pivoter selon sa direction axiale par rapport au tube principal, l'élément de conduite auxiliaire n'étant pas libre de mouvement dans les directions radiale et tangentielle. Dans la présente demande, une liaison glissante désigne une liaison qui lie un premier solide à un deuxième solide, le premier solide pouvant translater par rapport au deuxième solide dans la direction d'un axe. Ainsi, l'élément de conduite auxiliaire peut coulisser selon sa direction axiale par rapport au tube principal.

En variante, le connecteur selon l'invention peut être prévu de manière à ce que l'élément de tube auxiliaire ne puisse avoir aucun mouvement relatif avec l'élément de tube principal. Pour cela, les deux éléments de tube auxiliaire peuvent être solidairement fixés dans les moyens de guidage, par exemple dans les deux brides. Ainsi, les contraintes axiales peuvent être réparties dans la ligne principale et les lignes auxiliaires.

Alternativement, le connecteur selon l'invention peut être prévu de manière à ce que, d'un côté, l'élément de tube auxiliaire ne puisse avoir aucun mouvement relatif avec l'élément de tube principal, et que, de l'autre côté, l'élément de tube auxiliaire puisse avoir un mouvement relatif avec l'élément de tube principal. Pour cela, l'élément de tube auxiliaire peut être solidairement fixé à un premier moyen de guidage, par exemple une bride, et être en liaison pivot glissant avec un deuxième moyen de guidage, par exemple une bride. La distance de mouvement relatif peut être limité, par exemple par un moyen de réglage de jeu. En d'autres termes, le tronçon de colonne montante comporte à chacune de ses extrémités des moyens de liaison, schématisés sur la figure 2, qui permettent d'un côté de lier axialement un élément de conduite auxiliaire 7 au tube principal 6 et de l'autre côté de former la liaison pivot glissant entre l'élément de conduite auxiliaire 7 et le tube principal 6.

Pour cette dernière variante de réalisation, la liaison encastrement entre l'élément de conduite auxiliaire et l'élément de conduite principale est réalisée au niveau de l'élément connecteur femelle, et la liaison pivot glissant entre l'élément de conduite auxiliaire et l'élément de conduite principale est réalisée au niveau de l'élément connecteur mâle. Alternativement, la liaison encastrement entre l'élément de conduite auxiliaire et l'élément de conduite principale est réalisée au niveau de l'élément connecteur mâle, et la liaison pivot glissant entre l'élément de conduite auxiliaire et l'élément de conduite principale est réalisée au niveau de l'élément connecteur femelle.

Les tubes auxiliaires sont soumis à des efforts de compression axiale engendrés par la différence de pression interne/externe qui génère un « effet de fond » qui s'applique sur les extrémités de tubes (par exemple les lignes auxiliaires peuvent être soumises à des pressions de l'ordre de 1034 bar soit 15000 psi). Sous ces pressions, les éléments du tube principal s'allongent et les éléments des tubes auxiliaires se raccourcissent jusqu'à ce que le jeu soit nul. Lorsque que le jeu devient nul, toutes les lignes s'allongent de manière identique. Les éléments du tube principal sont susceptibles de s'allonger car ils doivent supporter en totalité ou partiellement, d'une part le poids de la colonne montante et le poids de la boue de forage, et d'autre part, les efforts de tension imposés à la colonne montante pour la maintenir sensiblement verticale. En général, les éléments de tube principal en tête de la colonne montante, c'est-à-dire proches de la surface de la mer, subissent les efforts de tension maximum, donc l'allongement maximum. Les éléments des tubes auxiliaires sont susceptibles de se raccourcir sous l'effet de la différence entre la pression interne et la pression externe due au fluide qu'ils contiennent. En effet, le fluide applique une pression sur les extrémités des éléments de tube auxiliaire en imposant des efforts de compression aux éléments de tube auxiliaire. De plus, la déformation radiale du tube dûe à la différence entre la pression interne et la pression externe entraîne un raccourcissement du tube. En général, les éléments en pied de colonne montante, c'est-à-dire à proximité du fond marin, subissent la différence de pression interne/externe maximum, donc le raccourcissement maximum.

Tant que le jeu est positif, l'élément de tube auxiliaire et l'élément de tube principal situés à la même hauteur peuvent varier de longueur indépendamment les uns par rapport aux autres. En revanche quand le jeu J devient nul c'est-à-dire lorsque le moyen de réglage de jeu est en contact avec la bride, l'élément de tube auxiliaire et l'élément de tube principal 6 correspondant forment un ensemble hyperstatique : l'élément de tube auxiliaire est solidaire à l'élément de tube principal d'une part au niveau de moyen de fixation, et d'autre part au niveau de la butée qui est en contact avec la bride. Par conséquent, l'élément de tube principal induit des efforts de tension dans l'élément de tube auxiliaire, et réciproquement.

Ainsi, ces liaisons permettent de répartir les efforts de tension, s'appliquant sur chacun des tronçons de la colonne montante, entre le tube principal 6 et les éléments de conduite auxiliaire. L'intégration selon l'invention via la mise en place du jeu permet d'augmenter la contribution du tube principal et par conséquent de réduire les efforts axiaux dans les lignes périphériques. La réduction des efforts axiaux dans les lignes périphériques grâce à cette intégration présente un bénéfice sur le dimensionnement des embouts et sur le dimensionnement des épaisseurs des tubes auxiliaires.

Avantageusement, le jeu est choisi en fonction de la longueur du tronçon, en effet les déformations des différentes lignes dépend de la longueur de celles-ci. Pour un tronçon de colonne montante classique de 75 ou 90 ft (22,86 m et 27,43 m), le jeu peut être réglé entre 0 et 1,5 pouce (0 et environ 38,1 mm). De préférence, le jeu peut être choisi entre 0,1 et 1 pouce, (2,54 et 25,4 mm) pour une répartition optimale des efforts dans les lignes, permettant d'engendrer une diminution de la masse de la colonne montante. Alternativement, le jeu peut être choisi entre 0,1 et 0,25 pouce (2,54 et 6,35 mm). Selon une alternative le jeu peut être choisi entre 0,25 et 1 pouce (6,35 mm et 25,4 mm). Une solution préférentielle présentant un bon compromis est un jeu d'environ 0,5 pouce (12,7 mm) ou un pouce (25,4 mm).

Afin de faciliter le montage et d'éviter des problèmes de blocage du pion en cas d'usure, au moins un jeu axial peut être réalisé entre un élément connecteur et la bague de verrouillage. De préférence, le jeu axial est strictement positif.

Selon un mode de réalisation de l'invention, un jeu axial est réalisé entre chaque élément connecteur et la bague de verrouillage. Ainsi, les problèmes liés à l'usure des tenons peuvent être évités, ce qui facilite la manipulation de la bague de verrouillage. Les deux jeux axiaux peuvent être identiques ou distincts. Les jeux axiaux se répartissent dans le connecteur en fur et à mesure des étapes de montage, verrouillage, déverrouillage, mise sous tension du connecteur. Par exemple, lors du montage, un jeu axial peut exister entre les tenons coopérant entre eux, et une fois le connecteur verrouillé et sous tension, un jeu axial peut exister entre les extrémités des deux éléments connecteurs.

Chaque jeu axial, strictement positif, peut être compris entre 0,5 et 30 mm, et de préférence entre 0,5 et 10 mm. Au-delà de 30 mm, l'effet technique relatif à l'évitement des problèmes de blocage reste présent, toutefois, l'encombrement augmente.

La figure 7 illustre schématiquement, et de manière non limitative, les jeux axiaux pouvant exister au sein du connecteur dans une position verrouillée du connecteur. Cette figure est un agrandissement au niveau de la zone de contact entre les éléments connecteurs mâle et femelle, selon une vue similaire à la figure 3. Un premier jeu axial J1 est formé entre l'élément connecteur mâle 9 et la bague de verrouillage 11. Un deuxième jeu axial J2 est formé entre l'élément connecteur femelle 8 et la bague de verrouillage 11. Les deux jeux axiaux peuvent être identiques, et peuvent par exemple valoir environ 1, 2, 3, 4 ou 5 mm.

En outre, conformément à une conception du connecteur, la bague peut comporter des moyens de limitation de la rotation de la bague, par exemple des butées, ces moyens limitant une rotation de la bague de verrouillage pour un angle égal à la plage angulaire des tenons.

De plus, selon une caractéristique de l'invention, le connecteur peut comprendre des moyens de blocage de la bague de verrouillage dans au moins une position, notamment dans la position verrouillée ou dans la position déverrouillée. Les moyens de blocage de la bague de verrouillage permettent d'éviter tout déverrouillage non désiré de la bague de verrouillage.

Selon un mode de réalisation de l'invention, les éléments de tube auxiliaire sont des tubes frettés par des fils de renfort, telles que des fibres de verre, de carbone, ou en aramide enrobées dans une matrice polymère. Ainsi, la résistance et le poids des lignes auxiliaires sont optimisés. En effet, la présente invention est particulièrement adapté pour les éléments de tubes auxiliaires frettés qui présentent l'avantage de réduire l'épaisseur d'acier et donc le poids de la colonne montante. L'inconvénient du frettage de présenter une plus faible raideur en flexion est compensé par le jeu qui permet de limiter le flambage des conduites auxiliaires. Alternativement, les éléments de tube principal et de tubes auxiliaires peuvent être composés en alliage métallique, par exemple un alliage d'aluminium ou en alliage de titane.

Conformément à une conception de l'invention, la bague de verrouillage peut comprendre des moyens de manipulation qui sont externes à la bague de verrouillage. Ces moyens de manipulation permettent de faire tourner la bague de verrouillage. Par exemple, les moyens de manipulation peuvent être une barre de manipulation. Selon une conception, les moyens de manipulation peuvent être insérés dans un pion.

De plus, la présente invention concerne une colonne montante, comprenant au moins deux tronçons de colonne montante assemblés par un connecteur tel que décrit précédemment. Le connecteur peut être réalisé selon l'une quelconque des combinaisons des modes de réalisation précédemment décrits : pluralité de pions démontables, pluralité de rangées de tenons, rangées de tenons inscrits sur des diamètres identiques ou distincts, jeux axiaux...

En outre, la présente invention concerne l'utilisation d'une telle colonne montante (avec l'une quelconque des combinaisons de modes de réalisation précédemment décrits) pour effectuer une opération de forage en mer, pour le reconditionnement d'un puits en mer (« work-over »), pour produire un effluent pétrolier en mer...

Par ailleurs, la présente invention concerne un procédé d'assemblage de deux tronçons de colonne au moyen d'un connecteur selon l'invention. Pour ce procédé, on peut mettre en œuvre les étapes suivantes :
a) on insère la bague de verrouillage dans un premier élément de tube principal, en particulier l'élément connecteur mâle ou l'élément connecteur femelle, ainsi le premier élément de tube principal est positionné dans la bague de verrouillage sans être verrouillé ;
b) on insère au moins un pion démontable dans la bague de verrouillage, ainsi le premier élément de tube principal est positionné dans la bague de verrouillage, en étant bloqué en translation, et possède encore un mouvement de rotation, il n'est donc pas verrouillé ;
c) on insère un deuxième élément de tube principal dans la bague de verrouillage, en particulier l'élément connecteur mâle ou femelle, de manière à emboîter l'élément connecteur mâle dans l'élément connecteur femelle, ainsi le deuxième élément de tube principal est positionné dans la bague de verrouillage sans être verrouillé ; et
d) on verrouille la bague de verrouillage, par rotation de la bague de verrouillage, cette rotation unique verrouille les deux éléments connecteurs qui n'ont plus de mouvements relatifs par rapport à la bague de verrouillage.

Pour l'étape d), lors du verrouillage, la rotation de la bague engendre la coopération respective des première et troisième séries de tenons, et des deuxième et quatrièmes séries de tenons. La rotation permettant le verrouillage simultané des deux connexions de type à baïonnette est une rotation d'un angle correspondant à la plage angulaire des tenons. Par exemple si les tenons ont une plage angulaire de 36°, alors la rotation de verrouillage est une rotation de 36°.

Pour l'étape b), le blocage en translation axiale du premier élément de tube principal par rapport à la bague de verrouillage est réalisé :
- dans une première direction axiale par le contact du/des pion(s) démontable(s) avec les tenons de l'élément connecteur, et
- dans la deuxième direction axiale :
   ∘ par le contact des tenons de la bague de verrouillage avec les tenons de l'élément connecteur en cas de pluralité de rangées de tenons inscrits dans un même diamètre, ou
   ∘ par la gravité, qui empêche la bague de verrouillage de translater vers le haut lorsque que la bague de verrouillage est suspendue.

Les étapes d'insertion consistent à mettre en place l'élément connecteur concerné dans la bague de verrouillage, de manière à ce qu'une seule rotation subséquente puisse permettre le verrouillage du connecteur.

Dans certains cas, les étapes d'insertion correspondent à un seul mouvement de translation relative de la bague par rapport à l'élément connecteur. C'est le cas par exemple, lorsque la série de tenons concernée ne comprend qu'une rangée de tenons, ou lorsque la série de tenons concernée comporte une pluralité de rangées de tenons inscrits dans des diamètres différents. Cette translation permet de mettre en position les tenons pour le blocage de la connexion à baïonnette.

Dans d'autres cas, les étapes d'insertion correspondent à un mouvement combiné comprenant une première étape de translation, suivie d'une première rotation et suivie d'une deuxième translation. il s'agit de mouvements relatifs entre la bague de verrouillage et l'élément connecteur concerné. C'est par exemple le cas, lorsque la série de tenons concernée comprend une pluralité de rangées de tenons inscrits dans des diamètres identiques. Les deux premiers mouvements relatifs permettent de faire passer une première rangée de tenons. La dernière étape de translation permet de mettre en position les tenons pour le blocage de la connexion à baïonnette.

Selon un mode de réalisation de l'invention, pour lequel plusieurs pions sont montés pour coopérer avec les tenons de l'élément connecteur mâle, et pour lequel la première et la troisième séries de tenons comportent deux rangées de tenons inscrits dans des diamètres identiques, et les deuxième et quatrième séries de tenons comportent deux rangées de tenons inscrits dans des diamètres différents, le procédé peut comporter les étapes suivantes :
a) on insère l'élément connecteur mâle dans la bague de verrouillage, au moyen d'une première translation, une première rotation et une deuxième translation ;
b) on insère les pions démontables dans la bague de verrouillage ;
c) on insère l'élément connecteur femelle dans la bague de verrouillage, par une unique translation, de manière à emboîter l'élément connecteur mâle dans l'élément connecteur femelle ; et
d) on verrouille la bague de verrouillage, par rotation de la bague de verrouillage.

En outre, la présente invention concerne un procédé de désassemblage de deux tronçons de colonne au moyen d'un connecteur selon l'invention. Pour ce procédé, on peut mettre en œuvre les étapes suivantes :
a) on déverrouille la bague de verrouillage, par rotation de la bague de verrouillage, cette rotation unique déverrouille les deux éléments connecteurs qui peuvent avoir des mouvement relatifs par rapport à la bague de verrouillage ;
b) on retire un deuxième élément de tube principal de la bague de verrouillage, en particulier l'élément connecteur mâle ou femelle, de manière à libérer l'emboîtement de l'élément connecteur mâle de l'élément connecteur femelle, ainsi, le deuxième élément de tube principal est extrait de la bague de verrouillage, alors que l'autre élément de tube principal reste déverrouillé mais bloqué en translation dans la bague de verrouillage, notamment par au moins un pion démontable ;
c) on retire au moins un pion démontable dans la bague de verrouillage, ainsi le premier élément de tube principal est positionné dans la bague de verrouillage, en étant déverrouillé et libre de mouvement ; et
d) on retire le premier élément de tube principal dans la bague de verrouillage, en particulier l'élément connecteur mâle ou l'élément connecteur femelle, ainsi le premier élément de tube principal est extrait de la bague de verrouillage.

Pour l'étape a), lors du déverrouillage, la rotation de la bague libère la coopération respective des première et troisième séries de tenons, et des deuxième et quatrièmes séries de tenons. La rotation permettant le déverrouillage simultané des deux connexions de type à baïonnette est une rotation d'un angle correspondant à la plage angulaire des tenons. Par exemple, si les tenons ont une plage angulaire de 36°, alors la rotation de déverrouillage est une rotation de 36°.

Les étapes de retrait consistent à extraire l'élément connecteur concerné de la bague de verrouillage, à partir d'une position où l'élément connecteur est positionné dans la bague de verrouillage.

Dans certains cas, les étapes de retrait correspondent à un seul mouvement de translation relative de la bague par rapport à l'élément connecteur. C'est le cas par exemple, lorsque la série de tenons concernée ne comprend qu'une rangée de tenons, ou lorsque la série de tenons concernée comporte une pluralité de rangées de tenons inscrits dans des diamètres différents. Cette translation permet de libérer les tenons de la connexion à baïonnette.

Dans d'autres cas, les étapes d'insertion correspondent à un mouvement combiné comprenant une première étape de translation, suivie d'une première rotation et suivie d'une deuxième translation. il s'agit de mouvements relatifs entre la bague de verrouillage et l'élément connecteur concerné. C'est par exemple le cas, lorsque la série de tenons concernée comprend une pluralité de tenons inscrits dans des diamètres identiques. La première étape de translation permet de désengager les tenons de la deuxième série de tenons. Les deux derniers mouvements relatifs permettent de faire passer une première rangée de tenons.

Selon un mode de réalisation de l'invention, pour lequel plusieurs pions sont montés pour coopérer avec les tenons de l'élément connecteur mâle, et pour lequel la première et la troisième séries de tenons comportent deux rangées de tenons inscrits dans des diamètres identiques, et les deuxième et quatrième séries de tenons comportent deux rangées de tenons inscrits dans des diamètres différents, le procédé comporte les étapes suivantes :
a) on déverrouille la bague de verrouillage, par rotation de la bague de verrouillage ;
b) on retire l'élément connecteur femelle de la bague de verrouillage, par un unique mouvement de translation de manière à libérer l'emboîtement de l'élément connecteur mâle dans l'élément connecteur femelle ;
c) on retire les pions démontables dans la bague de verrouillage ; et
d) on retire l'élément connecteur mâle de la bague de verrouillage, par un mouvement combiné d'une première translation, une première rotation et une deuxième translation.

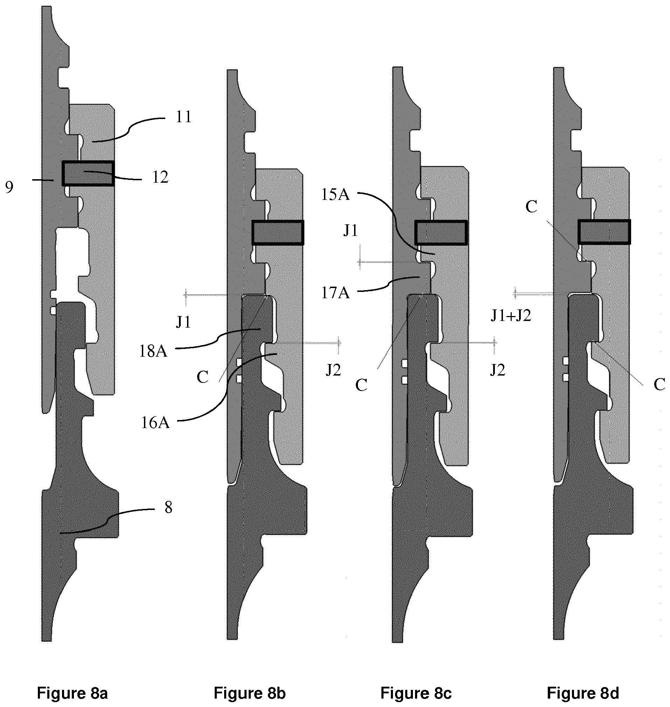

Pour le mode de réalisation, pour lequel deux jeux axiaux sont prévus de part et d'autre entre les éléments connecteurs et la bague de verrouillage. La répartition des jeux axiaux est illustrée sur les figures 8a à 8d pour différentes étapes de l'assemblage. Ces figures sont des vues en coupe similaires à la vue en coupe de la figure 3, et illustrent des étapes de l'assemblage de l'élément connecteur mâle 9 dans l'élément connecteur femelle 9 au moyen d'une bague de verrouillage 11 et de pions démontables 12.

Le verrouillage du connecteur peut être réalisé par les opérations suivantes :
1. Phase d'approche (figure 8a) : emboitement de la partie mâle 9 dans la partie femelle 8. Les dentures de la bague de verrouillage 11 passent entre celles de l'élément femelle 8.
2. L'emboitement se poursuit (figure 8b), la bague de verrouillage 11 vient en contact sur la partie supérieure de l'élément femelle 8. A ce stade, un jeu axial J1 existe entre l'élément connecteur mâle 9 et l'élément connecteur femelle 8, l'extrémité de l'élément connecteur femelle 8 est en contact C avec la bague de verrouillage, alors qu'un jeu axial J2 existe entre les tenons des deuxième 16 et quatrième séries 18 de tenons, c'est-à-dire entre les rangées centrales 16A et 18A et entre les rangées externes 16B et 18B des deuxième et quatrième séries.
3. A la fin de l'emboitement (figure 8c), l'élément mâle 9 vient en contact sur la partie supérieure de l'élément femelle 8. A ce stade, un jeu axial J1 existe entre tenons des première 15 et troisième 17 séries de tenons (c'est-à-dire entre les rangées centrales 15A et 17A et entre les rangées externes 15B et 17B des deuxième et quatrième séries), les extrémités des deux éléments connecteurs sont en contact C, alors qu'un jeu axial J2 existe entre les tenons des deuxième 16 et quatrième séries 18 de tenons (c'est-à-dire entre les rangées centrales 16A et 18A et entre les rangées externes 16B et 18B des deuxième et quatrième séries). A la fin de cette étape, le connecteur est prêt à être verrouillé.
4. La rotation de la bague pour le verrouillage (figure 8d) vient mettre en coïncidence les quatre rangées de dentures. Celle-ci ne risque plus d'être entravée car la surface de glissement se situe sur une zone peu sollicitée. A l'issue du verrouillage, la mise en tension de la conne montante vient mettre les dentures des deux systèmes à baïonnette en contact. Ainsi, un contact C est réalisé au niveau des tenons des quatre séries de tenons, et un jeu axial correspondant à la somme J1 + J2 existe entre les extrémités des éléments connecteurs mâle 9 et femelle 8.

Pour cet exemple, les jeux axiaux J1 et J2 peuvent être différents ou identiques et peuvent valoir 1, 2, 3, 4 ou 5 mm.

Le dispositif selon l'invention offre une solution intéressante pour monter rapidement et simplement une colonne montante dont les efforts de tension sont répartis entre les éléments de tubes auxiliaires et le tube principal. En effet, la connexion d'un tronçon de colonne montante à un autre tronçon de colonne montante est réalisée en une unique opération au moyen de la rotation de la bague de verrouillage. Cette connexion permet de mettre en communication et de rendre étanche l'élément de tube principal d'un tronçon avec celui de l'autre tronçon et, simultanément, de mettre en communication et de rendre étanche les éléments de conduites auxiliaires d'un des tronçons avec ceux de l'autre tronçon.

Pour le mode de réalisation, pour lequel la colonne montante comporte au moins une conduite auxiliaire, le connecteur compact selon l'invention permet de minimiser les efforts de flexion dans les brides, et donc de réduire les dimensions des brides et d'alléger le poids des connecteurs. Par ailleurs, le fait que la bague soit positionnée entre l'élément de tube principal et les éléments de tube auxiliaire permet d'augmenter la tenue du connecteur. En effet, la bague maintient les brides et empêche leurs flexions. En outre, ce positionnement permet de réduire le problème d'interférence des raccords des lignes auxiliaires, car les moments de flexion engendrés par les efforts axiaux désaxés sont de signes opposés. De plus, en position verrouillée, les tenons de la bague sont en prise avec les tenons de l'élément connecteur femelle qui sont positionnés sur la partie massive de l'élément connecteur femelle.

## Revendications

1. Connecteur pour assembler deux tronçons de colonne montante, comportant un premier élément de tube principal (6) prolongé par un élément connecteur mâle (9), un deuxième élément de tube principal (6) prolongé par un élément connecteur femelle (8), l'élément connecteur mâle (9) s'emboîtant dans ledit élément connecteur femelle (8) pour connecter lesdits deux éléments de tube principal (6), ledit connecteur comprenant des moyens de verrouillage dudit assemblage comportant une bague de verrouillage (11) disposée autour desdits éléments de tube principal (6), ladite bague de verrouillage (11) juxtaposant la zone de l'emboîtement dudit élément connecteur mâle (9) dans ledit élément connecteur femelle (8), ladite bague de verrouillage (11) comprenant une première (15) et une deuxième (16) séries de tenons sur sa surface intérieure, et lesdits éléments connecteurs mâle (9) et femelle (8) comportant respectivement sur leur face extérieure une troisième (17) et une quatrième (18) séries de tenons coopérant respectivement avec lesdites première (15) et deuxième (16) séries de tenons pour former deux connexions de type à baïonnette, les tenons des première (15) et deuxième (16) séries de tenons étant en saillie sur des plages angulaires identiques, chaque série de tenons (15, 16, 17, 18) comportant au moins une rangée de tenons, **caractérisé en ce que** lesdits moyens de verrouillage comprennent en outre au moins un pion démontable (12) agencé dans ladite bague de verrouillage (11) et coopérant avec un tenon de ladite troisième (17) ou de ladite quatrième (18) série de tenons pour bloquer ladite bague de verrouillage (11) en translation par rapport audit élément connecteur mâle (9) ou femelle (8), ledit pion démontable (12) étant agencé entre chaque tenon d'une rangée de tenons de ladite première (15) ou de ladite deuxième (16) série de tenons.

2. Connecteur selon la revendication 1, dans lequel chaque série de tenons (15, 16, 17, 18) comporte deux rangées de tenons.

3. Connecteur selon la des revendication 2, dans lequel ledit pion démontable (12) est agencé au niveau de ladite rangée de tenons la plus proche du centre de ladite bague de verrouillage (11) de ladite première (15A) ou deuxième série (16A) de tenons.

4. Connecteur selon l'une des revendications 2 à 3, dans lequel les répartitions circonférentielles desdits tenons de deux rangées consécutives de tenons d'une même série de tenons sont alternées.

5. Connecteur selon l'une des revendications 2 à 4, dans lequel au moins une rangée de tenons d'une série de tenons est inscrite dans un diamètre différent d'une autre rangée de ladite série de tenons.

6. Connecteur selon l'une des revendications 2 à 5, dans lequel les rangées de tenons d'au moins une série de tenons sont inscrites dans des diamètres identiques.

7. Connecteur selon l'une des revendications précédentes, dans lequel ledit pion démontable (12) est fileté et est agencé dans ladite bague de verrouillage (11) par vissage.

8. Connecteur selon l'une des revendications précédentes, dans lequel lesdites séries de tenons (15, 16, 17, 18) comportent au moins trois tenons, et de préférence au moins quatre tenons.

9. Connecteur selon l'une des revendications précédentes, dans lequel lesdits éléments connecteurs mâle (9) et femelle (8) sont munis de moyens de guidage pour le passage respectif d'un premier et d'un deuxième élément de tube auxiliaire (7).

10. Connecteur selon la revendication 9, dans lequel lesdits éléments de tube auxiliaire (7) sont solidairement fixés auxdits moyens de guidage.

11. Connecteur selon l'une des revendications 1 à 8, dans lequel un élément de tube auxiliaire (7) est solidaire d'un desdits moyens de guidage et l'autre élément de tube auxiliaire (7) est connecté par une liaison glissante avec l'autre desdits moyens de guidage, ladite liaison glissante autorisant un mouvement de translation relatif entre ledit élément de tube principal (6) et ledit élément de tube auxiliaire (7) sur une distance limitée.

12. Connecteur selon l'une des revendications 1 à 8, dans lequel lesdits deux éléments de tube auxiliaire (7) sont connectés par une liaison glissante avec lesdits moyens de guidage.

13. Connecteur selon l'une des revendications précédentes, dans lequel un premier jeu axial (J1) est prévu entre ladite première série de tenons (15) et ladite troisième série de tenons (17), et un deuxième jeu axial (J2) est prévu entre ladite deuxième série de tenons (16) et ladite quatrième série de tenons (18).

14. Connecteur selon la revendication 13, dans lequel lesdits premier et deuxième jeux axiaux (J1, J2) sont strictement positifs et sont compris entre 0,5 et 30 mm, de préférence entre 0,5 et 10 mm.

15. Colonne montante comprenant au moins deux tronçons (4) de colonne montante assemblés par un connecteur (5) selon l'une des revendications précédentes.

16. Procédé d'assemblage de deux tronçons (4) de colonne montante au moyen d'un connecteur (5) selon l'une des revendications 1 à 14, **caractérisé en ce qu'**on réalise les étapes suivantes :
a) on insère un premier élément de tube principal (6) dans ladite bague de verrouillage (7) ;
b) on insère ledit pion démontable (12) dans ladite bague de verrouillage (11) ;
c) on insère un deuxième élément de tube principal (6) dans ladite bague de verrouillage (11) ; et
d) on verrouille ladite bague de verrouillage (11) par rotation relative de ladite bague de verrouillage (11) par rapport auxdits éléments de tube principal (6).

17. Procédé selon la revendication 16, dans lequel au moins une insertion d'au moins un élément de tube principal (6) dans ladite bague de verrouillage (11) est mise en œuvre par une translation relative de ladite bague de verrouillage (11) par rapport audit élément de tube principal (6).

18. Procédé selon l'une des revendications 16 à 17, dans lequel au moins une insertion d'au moins un élément de tube principal (6) dans ladite bague de verrouillage (11) est mise en œuvre par au moins une première translation, une première rotation et une deuxième translation relatives de ladite bague de verrouillage (11) par rapport audit élément de tube principal (6).

19. Procédé de désassemblage de deux tronçons (4) de colonne montante au moyen d'un connecteur (5) selon l'une des revendications 1 à 14, **caractérisé en ce qu'**on réalise les étapes suivantes :
a) on déverrouille ladite bague de verrouillage (11) par rotation relative de ladite bague de verrouillage (11) par rapport auxdits éléments de tube principal (6);
b) on retire un premier élément de tube principal (6) de ladite bague de verrouillage (11) ;
c) on retire ledit pion démontable (12) de ladite bague de verrouillage (11) ; et
d) on retire un deuxième élément de tube principal (6) de ladite bague de verrouillage (11).

20. Procédé selon la revendication 19, dans lequel au moins un retrait d'au moins un élément de tube principal (6) de ladite bague de verrouillage (11) est mis en œuvre par une translation relative de ladite bague de verrouillage (11) par rapport audit élément de tube principal (6).

21. Procédé selon l'une des revendications 19 à 20, dans lequel au moins un retrait d'au moins un élément de tube principal (6) de ladite bague de verrouillage (11) est mise en œuvre par une première translation, une première rotation et une deuxième translation relatives de la bague de verrouillage (11) par rapport audit élément de tube principal (6).

22. Utilisation d'une colonne montante selon la revendication 15 pour effectuer une opération de forage, ou de reconditionnement de puits ou de production en mer.

## Patentansprüche

1. Verbinder zur Montage von zwei Segmenten eines Steigrohrs, umfassend ein erstes Hauptrohrelement (6), das durch ein männliches Verbinderelement (9) verlängert ist, ein zweites Hauptrohrelement (6), das durch ein weibliches Verbinderelement (8) verlängert ist, wobei das männliche Verbinderelement (9) in das weibliche Verbinderelement (8) eingeführt ist, um die beiden Hauptrohrelemente (6) zu verbinden, wobei der Verbinder Verriegelungsmittel der Montageanordnung umfasst, umfassend einen Verriegelungsring (11), der um die Hauptrohrelemente (6) angeordnet ist, wobei der Verriegelungsring (11) neben der Zone der Einführung des männlichen Verbinderelements (9) in das weibliche Verbinderelement (8) angeordnet ist, wobei der Verriegelungsring (11) eine erste (15) und eine zweite (16) Serie von Stiften auf seiner Innenfläche umfasst, und wobei das männliche (9) und das weibliche (8) Verbinderelement jeweils auf ihrer Außenfläche eine dritte (17) und eine vierte (18) Serie von Stiften umfassen, die jeweils mit der ersten (15) und zweiten (16) Serie von Stiften zusammenwirken, um zwei Verbindungen des Bajonett-Typs zu bilden, wobei die Stifte der ersten (15) und zweiten (16) Serie von Stiften auf identischen Winkelbereichen vorstehen, wobei jede Serie von Stiften (15, 16, 17, 18) mindestens eine Reihe von Stiften umfasst, **dadurch gekennzeichnet, dass** die Verriegelungsmittel außerdem mindestens einen abnehmbaren Zapfen (12) umfassen, der in dem Verriegelungsring (11) eingerichtet ist und mit einem Stift der dritten (17) oder der vierten (18) Serie von Stiften zusammenwirkt, um den Verriegelungsring (11) translatorisch in Bezug auf das männliche (9) oder weibliche (8) Verbinderelement zu blockieren, wobei der abnehmbare Zapfen (12) zwischen jedem Stift einer Reihe von Stiften der ersten (15) oder der zweiten (16) Serie von Stiften eingerichtet ist.

2. Verbinder nach Anspruch 1, wobei jede Serie von Stiften (15, 16, 17, 18) zwei Reihen von Stiften umfasst.

3. Verbinder nach Anspruch 2, wobei der abnehmbare Zapfen (12) auf der Ebene der Reihe von Stiften eingerichtet ist, die dem Zentrum des Verriegelungsrings (11) der ersten (15A) oder zweiten (16A) Serie von Stiften am nächsten liegt.

4. Verbinder nach einem der Ansprüche 2 bis 3, wobei Umfangsteilungen der Stifte von zwei aufeinanderfolgenden Reihen von Stiften derselben Serie von Stiften abgewechselt sind.

5. Verbinder nach einem der Ansprüche 2 bis 4, wobei mindestens eine Reihe von Stiften einer Serie von Stiften in einem anderen Durchmesser eingeschrieben ist, der von einer anderen Reihe der Serie von Stiften verschieden ist.

6. Verbinder nach einem der Ansprüche 2 bis 5, wobei die Reihen von Stiften mindestens einer Serie von Stiften in identischen Durchmessern eingeschrieben sind.

7. Verbinder nach einem der vorhergehenden Ansprüche, wobei der abnehmbare Zapfen (12) mit einem Gewinde versehen ist und in dem Verriegelungsring (11) durch Einschrauben eingerichtet ist.

8. Verbinder nach einem der vorhergehenden Ansprüche, wobei die Serie von Stiften (15, 16, 17, 18) mindestens drei Stifte und vorzugsweise mindestens vier Stifte umfasst.

9. Verbinder nach einem der vorhergehenden Ansprüche, wobei das männliche (9) und weibliche (8) Verbinderelement mit Führungsmitteln für den jeweiligen Durchgang eines ersten und eines zweiten Hilfsrohrelements (7) versehen sind.

10. Verbinder nach Anspruch 9, wobei die Hilfsrohrelemente (7) fest an den Führungsmitteln befestigt sind.

11. Verbinder nach einem der Ansprüche 1 bis 8, wobei ein Hilfsrohrelement (7) fest mit einem der Führungsmittel verbunden ist, und das andere Hilfsrohrelement (7) durch eine gleitende Verbindung mit dem anderen der Führungsmittel verbunden ist, wobei die gleitende Verbindung eine relative translatorische Bewegung zwischen dem Hauptrohrelement (6) und dem Hilfsrohrelement (7) über eine begrenzte Distanz gestattet.

12. Verbinder nach einem der Ansprüche 1 bis 8, wobei die beiden Hilfsrohrelemente (7) durch eine gleitende Verbindung mit den Führungsmitteln verbunden sind.

13. Verbinder nach einem der vorhergehenden Ansprüche, wobei ein erstes Axialspiel (J1) zwischen der ersten Serie von Stiften (15) und der dritten Serie von Stiften (17) bereitgestellt ist, und ein zweites Axialspiel (J2) zwischen der zweiten Serie von Stiften (16) und der vierten Serie von Stiften (18) bereitgestellt ist.

14. Verbinder nach Anspruch 13, wobei das erste und zweite Axialspiel (J1, J2) streng positiv sind und zwischen 0,5 und 30 mm, vorzugsweise zwischen 0,5 und 10 mm betragen.

15. Steigrohr, umfassend mindestens zwei Steigrohrsegmente (4), die durch einen Verbinder (5) nach einem der vorhergehenden Ansprüche montiert sind.

16. Verfahren zur Montage von zwei Segmenten (4) eines Steigrohrs mit Hilfe eines Verbinders (5) nach einem der Ansprüche 1 bis 14, **dadurch gekennzeichnet, dass** die folgenden Schritte durchgeführt werden:
a) ein erstes Hauptrohrelement (6) wird in den Verriegelungsring (7) eingeführt;
b) der abnehmbare Zapfen (12) wird in den Verriegelungsring (11) eingeführt;
c) ein zweites Hauptrohrelement (6) wird in den Verriegelungsring (11) eingeführt; und
d) der Verriegelungsring (11) wird durch relative Rotation des Verriegelungsrings (11) in Bezug auf die Hauptrohrelemente (6) verriegelt.

17. Verfahren nach Anspruch 16, wobei mindestens ein Einführen mindestens eines Hauptrohrelements (6) in den Verriegelungsring (11) durch eine relative Translation des Verriegelungsrings (11) in Bezug auf das Hauptrohrelement (6) durchgeführt wird.

18. Verfahren nach einem der Ansprüche 16 bis 17, wobei mindestens ein Einführen mindestens eines Hauptrohrelements (6) in den Verriegelungsring (11) durch mindestens eine erste relative Translation, eine erste relative Rotation und eine zweite relative Translation des Verriegelungsrings (11) in Bezug auf das Hauptrohrelement (6) durchgeführt wird.

19. Verfahren zur Demontage von zwei Segmenten (4) eines Steigrohrs mit Hilfe eines Verbinders (5) nach einem der Ansprüche 1 bis 14, **dadurch gekennzeichnet, dass** die folgenden Schritte durchgeführt werden:
a) der Verriegelungsring (11) wird durch relative Rotation des Verriegelungsrings (11) in Bezug auf die Hauptrohrelemente (6) entriegelt;
b) ein erstes Hauptrohrelement (6) des Verriegelungsrings (11) wird zurückgezogen;
c) der abnehmbare Zapfen (12) des Verriegelungsrings (11) wird zurückgezogen; und
d) ein zweites Hauptrohrelement (6) des Verriegelungsrings (11) wird zurückgezogen.

20. Verfahren nach Anspruch 19, wobei mindestens ein Zurückziehen mindestens eines Hauptrohrelements (6) des Verriegelungsrings (11) durch eine relative Translation des Verriegelungsrings (11) in Bezug auf das Hauptrohrelement (6) durchgeführt wird.

21. Verfahren nach einem der Ansprüche 19 bis 20, wobei mindestens ein Zurückziehen mindestens eines Hauptrohrelements (6) des Verriegelungsrings (11) durch eine erste relative Translation, eine erste relative Rotation und eine zweite relative Translation des Verriegelungsrings (11) in Bezug auf das Hauptrohrelement (6) durchgeführt wird.

22. Verwendung eines Steigrohrs nach Anspruch 15, für die Durchführung eines Bohrvorgangs oder für die Rekonditionierung von Bohrlöchern oder für die Offshore-Produktion.

## Claims

1. Connector for joining together two riser portions, having a first main tube element (6) extended by a male connector element (9), a second main tube element (6) extended by a female connector element (8), the male connector element (9) fitting in said female connector element (8) in order to connect said two main tube elements (6), said connector comprising means for locking said assembly that include a locking ring (11) disposed around said main tube elements (6), said locking ring (11) being juxtaposed with the fitting zone of said male connector element (9) in said female connector element (8), said locking ring (11) comprising a first set of lugs (15) and a second set of lugs (16) on its inner surface, and said male connector element (9) and female connector element (8) respectively having, on their outer face, a third set of lugs (17) and a fourth set of lugs (18) that cooperate with said first set of lugs (15) and second set of lugs (16), respectively, in order to form two bayonet-type connections, the lugs of the first set of lugs (15) and second set of lugs (16) protruding over identical angular ranges, each set of lugs (15, 16, 17, 18) having at least one row of lugs, **characterized in that** said locking means also comprise at least one removable pin (12) that is arranged in said locking ring (11) and cooperates with a lug of said third set of lugs (17) or said fourth set of lugs (18) in order to prevent said locking ring (11) from moving in translation with respect to said male connector element (9) or female connector element (8), said removable pin (12) being arranged between each lug of a row of lugs of said first set of lugs (15) or said second set of lugs (16).

2. Connector according to Claim 1, wherein each set of lugs (15, 16, 17, 18) has two rows of lugs.

3. Connector according to Claim 2, wherein said removable pin (12) is arranged by said row of lugs that is closest to the centre of said locking ring (11) of said first set of lugs (15A) or second set of lugs (16A).

4. Connector according to either of Claims 2 and 3, wherein the circumferential distributions of said lugs of two consecutive rows of lugs of one and the same set of lugs alternate with one another.

5. Connector according to one of Claims 2 to 4, wherein at least one row of lugs of a set of lugs is inscribed at a different diameter from another row of said set of lugs.

6. Connector according to one of Claims 2 to 5, wherein the rows of lugs of at least one set of lugs are inscribed at identical diameters.

7. Connector according to one of the preceding claims, wherein said removable pin (12) is threaded and is arranged in said locking ring (11) by being screwed therein.

8. Connector according to one of the preceding claims, wherein said sets of lugs (15, 16, 17, 18) include at least three lugs, and preferably at least four lugs.

9. Connector according to one of the preceding claims, wherein said male connector element (9) and female connector element (8) are provided with guide means for the passage of a first and a second auxiliary tube element (7), respectively.

10. Connector according to Claim 9, wherein said auxiliary tube elements (7) are securely fixed to said guide means.

11. Connector according to one of Claims 1 to 8, wherein one auxiliary tube element (7) is secured to one of said guide means and the other auxiliary tube element (7) is connected by a sliding connection to the other of said guide means, said sliding connection allowing a relative movement in translation between said main tube element (6) and said auxiliary tube element (7) over a limited distance.

12. Connector according to one of Claims 1 to 8, wherein said two auxiliary tube elements (7) are connected by a sliding connection to said guide means.

13. Connector according to one of the preceding claims, wherein a first axial clearance (J1) is provided between said first set of lugs (15) and said third set of lugs (17), and a second axial clearance (J2) is provided between said second set of lugs (16) and said fourth set of lugs (18).

14. Connector according to Claim 13, wherein said first and second axial clearances (J1, J2) are strictly positive and are between 0.5 and 30 mm, preferably between 0.5 and 10 mm.

15. Riser comprising at least two riser portions (4) joined together by a connector (5) according to one of the preceding claims.

16. Method for joining two riser portions (4) together by means of a connector (5) according to one of Claims 1 to 14, **characterized in that** the following steps are carried out:
a) a first main tube element (6) is inserted into said locking ring (7);
b) said removable pin (12) is inserted into said locking ring (11);
c) a second main tube element (6) is inserted into said locking ring (11); and
d) said locking ring (11) is locked by relative rotation of said locking ring (11) with respect to said main tube elements (6).

17. Method according to Claim 16, wherein at least one insertion of at least one main tube element (6) into said locking ring (11) is implemented by a relative movement in translation of said locking ring (11) with respect to said main tube element (6) .

18. Method according to either of Claims 16 and 17, wherein at least one insertion of at least one main tube element (6) into said locking ring (11) is implemented by at least a relative first movement in translation, relative first rotation and relative second movement in translation of said locking ring (11) with respect to said main tube element (6).

19. Method for disassembling two riser portions (4) by means of a connector (5) according to one of Claims 1 to 14, **characterized in that** the following steps are carried out:
a) said locking ring (11) is unlocked by relative rotation of said locking ring (11) with respect to said main tube elements (6);
b) a first main tube element (6) is withdrawn from said locking ring (11);
c) said removable pin (12) is withdrawn from said locking ring (11); and
d) a second main tube element (6) is withdrawn from said locking ring (11).

20. Method according to Claim 19, wherein at least one withdrawal of at least one main tube element (6) from said locking ring (11) is implemented by a relative movement in translation of said locking ring (11) with respect to said main tube element (6) .

21. Method according to either of Claims 19 and 20, wherein at least one withdrawal of at least one main tube element (6) from said locking ring (11) is implemented by a relative first movement in translation, relative first rotation and relative second movement in translation of the locking ring (11) with respect to said main tube element (6).

22. Use of a riser according to Claim 15 to carry out a drilling operation, or a well workover operation or offshore production operation.
